# EUROPEAN PATENT SPECIFICATION

(11) **EP 1 195 968 B1**
(45) Date of publication and mention of the grant of the patent: **01.02.2006**
(21) Application number: 01306389.6
(22) Date of filing: 25.07.2001
(51) Int. Cl.: H04L 29/06

(54) **Encryption processing for streaming media**
Verschlüsselungsverarbeitung für einen Medienstrom
Traitement de cryptage pour un flux média

(30) Priority: 26.07.2000 NZ 50600200
(43) Date of publication of application: 10.04.2002
(73) Proprietor: RPK New Zealand Limited, Parnell, Auckland (NZ)
(72) Inventor: Raike, William Michael, Swanson, Auckland (NZ)
(74) Representative: Hector, Annabel Mary

(56) References cited:
- ALATTAR A M ET AL: "Evaluation of selective encryption techniques for secure transmission of MPEG-compressed bit-streams" CIRCUITS AND SYSTEMS, 1999. ISCAS '99. PROCEEDINGS OF THE 1999 IEEE INTERNATIONAL SYMPOSIUM ON ORLANDO, FL, USA 30 MAY-2 JUNE 1999, PISCATAWAY, NJ, USA,IEEE, US, 30 May 1999 (1999-05-30), pages 340-343, XP010341246 ISBN: 0-7803-5471-0
- ALATTAR A M ET AL: "Improved selective encryption techniques for secure transmission of MPEG video bit-streams" IMAGE PROCESSING, 1999. ICIP 99. PROCEEDINGS. 1999 INTERNATIONAL CONFERENCE ON KOBE, JAPAN 24-28 OCT. 1999, PISCATAWAY, NJ, USA,IEEE, US, 24 October 1999 (1999-10-24), pages 256-260, XP010368705 ISBN: 0-7803-5467-2

## Description

This invention relates to encryption techniques for streaming media.

Digital content such as video, audio and multimedia digital files are usually quite large and there may be a long transmission delay before a recipient is able to see or hear the content of such files when transmitted to him, particularly over the internet where bandwidth at some point in the transmission channel may be limited. The technique of streaming media files addresses this problem and allows the recipient to commence viewing video or listening to audio long before the media file has been completely received by him. A video may be displayed and audio played as soon as there is sufficient data in the buffer of the recipient station.

As with other digital files there are a number of applications where it is highly desirable for a streaming media file to be encrypted. Usually the content will be subject to copyright and encryption will be desired to supplement the legal protection XP 010341246 shows an example of bitstream encryption. The encryption of streaming media poses additional problems to those encountered when a complete file is encrypted, transmitted and decrypted before use by the recipient. In practice most digital data transmission over a distance is conducted using packet technology. Therefore the encryption of streaming media requires packet by packet encryption and decryption if the advantages of streaming are to be preserved.

It is an object of the present invention to provide fast and secure encryption for streaming media.

Accordingly the invention consists in a method for securely transmitting streamed media consisting of a stream header and a series of data packets between a sender and a recipient comprising the steps of:
generating a random base key,
encrypting said base key to create an open key,
transmitting said open key to said recipient,
encrypting each packet of the data in the stream by;
   (a) assigning a tag value to each packet if no tag value akeady exists,
   (b) creating a packet key by computing a secure hash of said base key and the tag value or the assigned tag value of the packet,
   (c) encrypting the data in the packet using said packet key, and
   (d) adding said tag value to the corresponding encrypted packet data and inserting the packet so processed into the packet stream,
transmitting the encrypted packet stream to said recipient,
at the recipient's station receiving said open key and the encrypted packet stream,
decrypting said open key to derive the base key,
decrypting each received encrypted packet in the stream by:
   (a) extracting the tag value from each packet,
   (b) recreating said packet key by computing a secure hash of the base key and the packet's tag value,
   (c) decrypting the packet data using said packet key,
   (d) and storing or outputting the decrypted packet data in a form suitable for playing the streamed media.

The invention will now be described by way of example with reference to the drawings, in which:

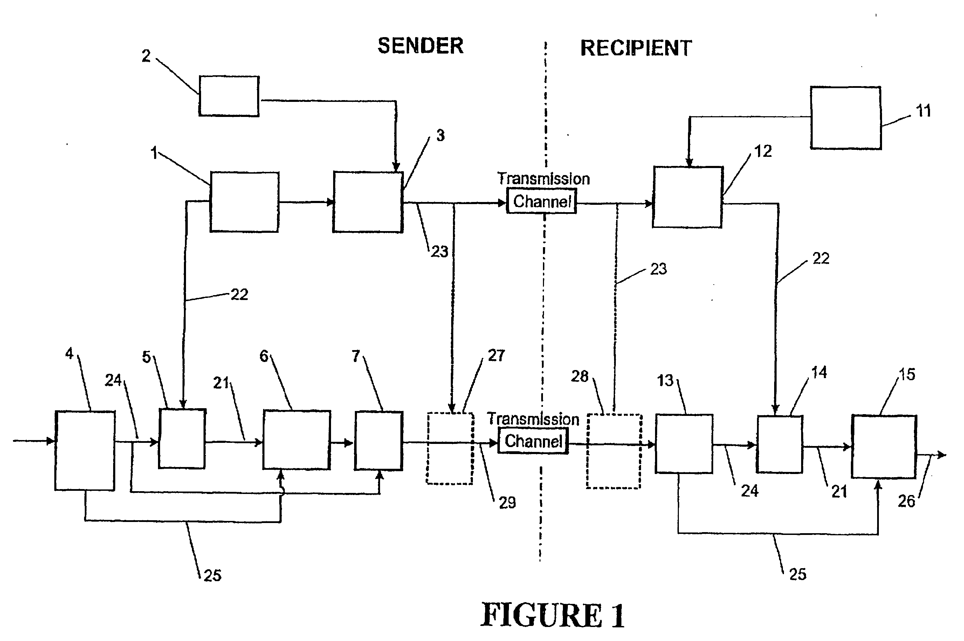

Figure 1 is a block diagram showing the essential encryption and decryption process steps of the present invention.

In this patent specification:
(1) a "stream" is assumed to be composed of a stream header, containing information about the stream itself, followed by a series of packets,
(2) each "packet" is assumed to consist of a packet header plus the actual data payload of the packet,
(3) the generated random key used to create and deconstruct packet keys is called a "base key" but could also be termed a "session key", a "base stream key" or a "closed key",
(4) both the packet header and data payload are assumed to consist of some number of entire bytes (octets), which numbers may vary from packet to packet, and
(5) each packet header is assumed to include at least one item of information that uniquely identifies that packet, called here a "tag". An example could be a time position value indicating the packet's relative time offset from the stream start, or a serial number, or (x, y) co-ordinates pertaining to the intended destination or location of the packet data. The tag information, along with the rest of the packet header, must accompany a packet "in the clear", that is, not encrypted.

Figure 1 shows diagrammatically the steps of the present encryption system as applied by a sender of streaming media and the steps of decryption as applied by a recipient of the streaming media. This may be implemented in various preferred manners as described below.

The encryption process essentially involves encrypting (6) the data in each streaming media packet with a packet key 21 which is generated by computing a secure hash (5) of the packet tag value with a base key 22. To decrypt the encrypted packet data it is necessary for the recipient to be able to generate the packet key 21 and in order to do this the recipient must be in possession of the base key 22. The base key 22 generated (1) randomly by the sender is passed to the recipient after being asymmetrically encrypted (3) with the recipient's public key 2. The encrypted base key (open key 23) is transmitted to the recipient. It is convenient, although not necessary, to pass the open key 23 to the recipient in the stream header as indicated in Figure 1 by the dotted lines.

The packet encryption process commences with the extraction 4 of tag data 24 from incoming streaming media packets (or the creation of such tags if the packets do not contain tag data) and creating a packet key 21 by computing (5) a secure hash of the base key 22 and the tag value 24. For each streamed media transmission or session, a base or session key 22 is randomly generated (1) and is hashed (5) with the tag value of each streaming media packet to produce a packet key 21 which is used to encrypt (6) (preferably symmetrically) the data 25 carried in the corresponding packet. Hash functions such as SHA-1 or MD5 are suitable for the hash computation 5. While in the preferred embodiment packet data is encrypted using a symmetric algorithm 6, other types of encryption algorithms could be used so long as the required minimum computation time is not exceeded. The encrypted packet data or ciphertext is then combined (7) with the unencrypted or open tag value 24 for that packet. The process described is applied to each data packet in the stream to produce an encrypted packet stream 29 which is transmitted to the recipient.

At the recipient's station the stream header is first received and the open key 23 extracted 28 from it unless the open key has already been received earlier by other means. The open key 23 is then asymmetrically decrypted (12) using the recipient's private key 11. The decrypted open key, that is the base key 22, is then available to the hash algorithm 14 to allow the packet key 21 to be derived.

The tag values 24 of each stream data packet are extracted (13) and then hashed (14) with the base key 22 to produce the packet key 21 for each packet. The stream packets with tag values removed (stream data 25) are then symmetrically decrypted (15) using the corresponding packet key 21. The plaintext stream packets 26, with or without tag values depending on the transmission protocol being used, are then stored or outputted in a form suitable for use by a streaming media player.

The present encryption processing may insert specific information into designated field(s) within the stream header, and also replaces the data payload of each packet with encrypted data. All of the packets in the stream are encrypted, but only the data payload is encrypted and not the packet header information. This remains unchanged by the encryption processing. The size in bytes of the encrypted data in a packet need not be larger than the size of the original (unencrypted) data payload.

The encryption algorithm used to protect the base key prior to its transfer from sender to recipient preferably is a public-key (asymmetric) algorithm in which the recipient's public key is used by the sender to encrypt the packet key and the corresponding private key is used by the recipient to decrypt it. The private keys used by the public key algorithm may contain protocol or formatting information in addition to key data bits. The number of key data bits (the key size) is scalable for different applications, based on security requirements, but at least 607 bit keys must be allowable. A specific application may permit only a single key size to be used, or may handle multiple key sizes.

A valid private key preferably consists of any specified (arbitrary or application-defined, or randomly generated) pattern of key data bits, although a limited number of data patterns may be excluded (for example, all zeros or all ones). Public keys should have the same number of key data bits as private keys, and a fast asymmetric algorithm is used to rapidly generate a public key from any valid private key, while at the same time it is computationally infeasible to ascertain the private key from which a particular public key has been generated.

When encrypting a stream using a particular public key, the encryption algorithm (3) may insert data comprising the open key into an appropriate designated place within the stream header as shown by the dotted lines in Figure 1, or alternatively the open key can be transmitted to the recipient at an earlier time as shown by the solid lines between encryption Stage 3 and decryption Stage 12. Upon receipt of the open key, a recipient who possesses the correct private key is able, using the decryption algorithm, to use the open key to establish or calculate information (a "closed key") known only to the sender and to the recipient(s).

The process of encrypting each packet's data depends upon (ie. utilises in an essential way) the closed key and the packet's tag information. It is computationally infeasible, without knowing the private key, to calculate or determine the closed key based upon knowledge of publicly accessible information such as the public key, open key, encrypted stream data, packet tags, etc.

The encryption processing should use true random data to ensure that the closed key created for encrypting any stream varies randomly even if the same stream is encrypted on multiple occasions. The encryption algorithm ensures that even if two packets of data in the original stream contain identical data bits, the encrypted data for the packets is different. The encryption processing also ensures that if a stream is encrypted on multiple occasions, the encrypted packet data and the open key are different on each occasion.

The decryption processing is such that each intact packet that is received can be correctly decrypted, even if some packets are not received, or if some or all packets are received in a different order from the order in which they were sent.

In use a content owner of the streamed audio visual works will be provided with software which performs the encryption process as and when content is distributed. The software input will take the form of a packetised, compressed and encoded file. For example if the stream was to be played by a recipient using a Real player the file would use Real coding. Standard compression algorithms such as MPEG2 or MPEG4 would be used. In the case of a Real encoded file the tag value, which is an essential part of the present encryption system, would be the Real timeline value. This is a measure of time from when the stream starts.

Users will have received decryption software in advance from the content provider direct, by downloading from a website or bundled with the streaming player software. A typical business model for deployment of the present encryption software would be for content providers to be licensed for value with users being provided with the decryption software component free of charge. Users would pay the content provider for only the content itself. On payment (or equivalent) for the content the user would be provided with the open key corresponding to the requested content.

A system of media key management and distribution suitable for use in conjunction with the present encryption system is disclosed in applicant's New Zealand patent application 509037.

## Claims

1. A method for securely transmitting streamed media consisting of a stream header and a series of data packets between a sender and a recipient ***characterised in that***
the sender generates (1) a random base key (22),
said base key is encrypted (31) to create an open key (23),
said open key (23) is transmitted to said recipient,
and that each packet of the data in the stream is encrypted by:
(a) assigning a tag value (24) to each packet if no tag value already exists,
(b) creating a packet key (21) by computing (5) a secure hash of said base key (22) and the tag value (24) or the assigned tag value (24) of the packet,
(c) encrypting (6) the data (25) in the packet using said packet key (21), and
(d) adding (7) said tag value to the corresponding encrypted packet data and inserting the packet so processed into the packet stream (29) which is transmitted to said recipient,
and that at the recipient's station the received open key (23) is decrypted (12) to derive the base key (22), and
each received encrypted packet in the stream (29) is decrypted by:
(a) extracting (13) the tag value (24) from each packet,
(b) recreating said packet key (21) by computing (14) a secure hash of the base key (22) and the packet's tag value (24),
(c) decrypting (15) the packet data (25) using said packet key (21) to produce the decrypted packet data (26) in a form suitable for playing the streamed media.

2. A method according to claim 1 wherein said open key (23) is transmitted to the recipient by adding (27) it to the stream header and then extracted (28) from the stream header at the recipient's station for decryption.

3. A method according to either of claims 1 or 2 wherein said base key (22) is encrypted (3) using a public key (2) encryption algorithm in conjunction with the recipient's public key and wherein said open key (23) is decrypted using said public key encryption algorithm in conjunction with the recipient's private key (11).

4. A method according to any one of claims 1 to 3 wherein said packet data (25) is encrypted using a symmetric encryption algorithm in conjunction with said packet key (21) and said encrypted data (29) is decrypted at the recipient's station using said symmetric encryption algorithm in conjunction with said recreated packet key (21).

5. A method according to any one of claims 1 to 4 wherein the hash function (5, 14) used to create and re-establish said packet key is SHA-1 or MD5.

## Patentansprüche

1. Verfahren zur sicheren Übertragung von aus einem Stream-Header und einer Reihe von Datenpaketen bestehenden gestreamten Medien zwischen einem Sender und einem Empfänger, ***dadurch gekennzeichnet,* dass** der Sender einen zufälligen Basisschlüssel (22) erzeugt (1),
dass der Basisschlüssel verschlüsselt wird (31), um einen offenen Schlüssel (23) zu erstellen,
dass der offene Schlüssel (23) zu dem Empfänger übertragen wird
und dass jedes Paket der Daten in dem Stream verschlüsselt wird durch:
(a) Zuordnen eines Markierungswerts (24) zu jedem Paket, wenn nicht bereits ein Markierungswert vorhanden ist,
(b) Erstellen eines Paketschlüssels (21) durch Berechnen (5) eines sicheren Hash des Basisschlüssels (22) und des Markierungswerts (24) oder des zugeordneten Markierungswerts (24) des Pakets,
(c) Verschlüsseln (6) der Daten (25) in dem Paket unter Verwendung des Paketschlüssels (21) und
(d) Hinzuaddieren (7) des Markierungswerts zu den entsprechenden verschlüsselten Paketdaten und Einfügen des solchermaßen verarbeiteten Pakets in den Paket-Stream (29), der zu dem Empfänger übertragen wird, und
dass an der Station des Empfängers der empfangene offene Schlüssel (23) entschlüsselt wird (12), um den Basisschlüssel (22) abzuleiten, und
dass jedes empfangene verschlüsselte Paket in dem Stream (29) entschlüsselt wird durch:
(a) Extrahieren (13) des Markierungswerts (24) aus jedem Paket,
(b) Wiederherstellen des Paketschlüssels (21) durch Berechnen (14) eines sicheren Hash des Basisschlüssels (22) und des Paket-Markierungswerts (24) und
(c) Entschlüsseln (15) der Paketdaten (25) unter Verwendung des Paketschlüssels (21), um die entschlüsselten Paketdaten (26) in einer Form zu produzieren, die zum Abspielen der gestreamten Medien geeignet ist.

2. Verfahren nach Anspruch 1, wobei der offene Schlüssel (23) durch dessen Hinzuaddieren (27) zu dem Stream-Header zu dem Empfänger übertragen und dann zur Entschlüsselung an der Station des Empfängers aus dem Stream-Header extrahiert wird (28).

3. Verfahren nach Anspruch 1 oder 2, wobei der Basisschlüssel (22) unter Verwendung eines Verschlüsselungsalgorithmus mit einem öffentlichen Schlüssel (2) in Verbindung mit dem öffentlichen Schlüssel des Empfängers verschlüsselt wird (3) und wobei der offene Schlüssel (23) unter Verwendung des Verschlüsselungsalgorithmus mit öffentlichem Schlüssel in Verbindung mit dem geheimen Schlüssel (11) des Empfängers entschlüsselt wird.

4. Verfahren nach einem der Ansprüche 1 bis 3, wobei die Paketdaten (25) unter Verwendung eines symmetrischen Verschlüsselungsalgorithmus in Verbindung mit dem Paketschlüssel (21) verschlüsselt werden und die verschlüsselten Daten (29) unter Verwendung des symmetrischen Verschlüsselungsalgorithmus in Verbindung mit dem wiederhergestellten Paketschlüssel (21) an der Station des Empfängers entschlüsselt werden.

5. Verfahren nach einem der Ansprüche 1 bis 4, wobei die Hash-Funktion (5, 14), die verwendet wird, um den Paketschlüssel zu erstellen und wiederherzustellen, SHA-1 oder MD5 ist.

## Revendications

1. Un procédé de transmission sécurisé d'un flux média, consistant en un flux d'en-têtes et une série de paquets de données entre un émetteur et un destinataire, **caractérisé en ce que** :
l'émetteur génère (1) une clé (22) à base aléatoire,
ladite clé est chiffrée (31) pour créer une clé ouverte (23),
ladite clé ouverte (23) est transmise audit destinataire,
et **en ce que** chaque paquet des données dans le flux est chiffré par :
(a) affectation d'une valeur d'étiquette (24) à chaque paquet, si aucune valeur d'étiquette n'existe déjà,
(b) création d'une clé de paquet (21) en calculant (5) un hachage sécurisé de ladite clé de base (22) et de la valeur d'étiquette (24) ou de la valeur d'étiquette (24) affectée du paquet,
(c) chiffrement (6) des données (25) dans le paquet, en utilisant ladite clé de paquet (21) et,
(d) ajout (7) de ladite valeur d'étiquette aux données de paquet chiffrées correspondantes et insérer le paquet ainsi traité dans le flux de paquet (29) transmis audit destinataire,
et **en ce que**, à la station destinataire, la clé ouverte (23) reçue est déchiffrée (12) pour dériver la clé de base (22), et
chaque paquet chiffré reçu dans le flux (29) est déchiffré par :
(a) extraction (13) de la valeur d'étiquette (24) de chaque paquet,
(b) recréation de ladite clé de paquet (21) par calcul (14) d'un hachage sécurisé, de la clé de base (22) et de la valeur d'étiquette de paquets (24),
(c) déchiffrage (15) des données de paquet (25) en utilisant ladite clé de paquet (21), pour produire les données de paquet (26) déchiffrées sous une forme convenant pour transmettre le flux média.

2. Un procédé selon la revendication 1, dans lequel ladite clé ouverte (23) est transmise au destinataire en l'additionnant (27) au flux d'en-têtes et, ensuite, extraite (28) des flux d'en-têtes, à la station destinataire, pour déchiffrement.

3. Un procédé selon la revendication 1 ou 2, dans lequel ladite clé de base (22) est chiffrée (3) en utilisant un algorithme de chiffrement à clé publique (2), conjointement avec la clé publique du destinataire, et dans lequel ladite clé ouverte (23) est déchiffrée en utilisant ledit algorithme de chiffrement de clé publique, conjointement à la clé privée (11) du destinataire.

4. Un procédé selon l'une quelconque des revendications 1 à 3, dans lequel lesdits paquets de données (25) sont chiffrés en utilisant un algorithme de chiffrement symétrique, conjointement avec ladite clé de paquet (21), et lesdites données chiffrées (29) sont déchiffrées à la station destinataire, en utilisant ledit algorithme de chiffrement symétrique, conjointement avec ladite clé de paquet (21) recréée.

5. Un procédé selon l'une quelconque des revendications 1 à 4, dans lequel la fonction de hachage (5, 14), utilisée pour créer et rétablir ladite clé de paquet, est SHA-1 ou MD5.
